# FASCICULE DE BREVET EUROPEEN

(11) **EP 3 292 692 B1**
(45) Date de publication et mention de la délivrance du brevet: **17.07.2019**
(21) Numéro de dépôt: 16722829.5
(22) Date de dépôt: 03.05.2016
(51) Int. Cl.: H04N 21/235, H04N 21/431, H04N 21/435, H04N 21/485

(54) **PROCÉDÉ DE RÉGLAGE DU NIVEAU DE DÉFINITION DES IMAGES D'UN PROGRAMME MULTIMÉDIA**
VERFAHREN ZUR EINSTELLUNG DER DEFINITIONSSTUFE VON BILDERN EINES MULTIMEDIAPROGRAMMS
METHOD FOR SETTING THE LEVEL OF DEFINITION OF THE IMAGES OF A MULTIMEDIA PROGRAMME

(30) Priorité: 05.05.2015 FR 1554020
(43) Date de publication de la demande: 14.03.2018
(73) Titulaire: Viaccess, 92057 Paris La Défense Cedex (FR)
(72) Inventeur: ASSAYAG, Chem, 75009 Paris (FR); DUBROEUCQ, Gilles, 28130 Saint-Piat (FR)
(74) Mandataire: Brevalex
(86) Numéro de dépôt international: PCT/EP2016/059822
(87) Numéro de publication internationale: WO 2016/177692

(56) Documents cités:
- EP-A1- 2 094 009
- WO-A1-2015/010544
- GB-A- 2 427 785
- US-A1- 2011 080 522
- US-A1- 2012 059 953
- US-A1- 2012 204 211
- US-A1- 2013 063 664
- US-A1- 2015 071 615

## Description

### DOMAINE TECHNIQUE

L'invention se situe dans le domaine du traitement d'images affichées par des équipements de visualisation de vidéo (TV, Media Players, décodeurs, ou tout autre dispositif équivalent) ou d'images fixes et concerne plus spécifiquement, un procédé de réglage du niveau de définition d'au moins une image d'un programme audiovisuel affiché sur un écran d'un terminal muni d'au moins une unité de caractérisation du programme et d'au moins une unité de sélection de réglages prédéfinis.

L'invention concerne également un terminal de visualisation d'au moins une image d'un programme audio-visuel comportant, au moins un écran, au moins une unité de caractérisation du programme, et au moins une unité de sélection de réglages prédéfinis de ladite image.

L'invention concerne aussi un programme d'ordinateur mémorisé sur un support d'enregistrement comportant des instructions pour mettre en oeuvre les étapes du procédé selon l'invention lorsqu'il est exécuté sur un ordinateur.

### ETAT DE LA TECHNIQUE ANTERIEURE

US 2015/071615 A1 **(MESSMER NEIL W [CA]) 12 mars 2015** concerne des systèmes et des procédés permettant de fournir des données vidéo et / ou de contrôler l'affichage de données vidéo.

EP 2 094 009 A1 **(TV WORKS LLC [US]) 26 août 2009** concerne généralement l'affichage d'informations sur un programme de télévision à l'aide d'un guide électronique de programmes et, plus spécifiquement, l'affichage d'informations personnalisées par un utilisateur.

US 2012/059953 A1 **(KLAPPERT WALTER R [US]) 8 mars 2012** concerne des systèmes et des procédés pour générer et / ou afficher un contenu vidéo personnalisé.

Pour régler le niveau de définition des images affichées d'un programme diffusé ou d'un programme lu à partir d'un support d'enregistrement, les terminaux de l'art antérieur (téléviseurs ou décodeurs TV, ordinateur, tablettes, ou téléphone mobile) proposent des traitements de mise à l'échelle (upscaling en anglais) pour convertir des programmes multimédias de définition plus faible vers la définition native de l'écran du terminal utilisé en interpolant de manière plus ou moins élaborée les pixels intermédiaires. C'est le cas, par exemple, de la conversion d'une définition SD (pour standard definition) de 720 x 576 pixels en une définition HD (pour high definition) de 920 x 1080 pixels, ou encore de la conversion d'une définition HD vers une définition UHD (pour ultra-high definition) 4K de 3840 x 2160 pixels.

De même, certains décodeurs sont capables de faire une mise à l'échelle dans le sens inverse (downscaling en anglais) afin de pouvoir fournir en sortie un signal compatible avec la résolution de l'écran d'affichage. C'est le cas, par exemple, d'une conversion d'un signal TV UHD vers un format HD. Ce cas de figure se présente également sur un téléviseur apte à envoyer un flux vidéo vers un périphérique dont la résolution est plus faible (ex : tablette).

Ainsi, pour « adoucir une image » on peut soit utiliser un filtre passe-bas ou simplement effectuer des opérations de downscaling et upscaling avec interpolation.

Cependant, avec l'arrivée du format UHD (4K), certains utilisateurs de terminaux de visualisation (TV, tablette, ordinateur fixe ou portable, téléphone portables) pourraient être gênés par l'hyper réalisme des images de certaines scènes affichées dans ce format. En effet l'UHD présente un piqué des images sur toute la profondeur qui dépasse la vision réelle perçue par un humain. Aussi, selon le type de scène ou de programme multimédia, certains préféreront un affichage en format HD classique et/ou moins détaillée (par exemple reportage sur une opération chirurgicale, journal télévisé avec des scènes difficiles...) qui ne provoque pas de gêne.

Par ailleurs, les utilisateurs peuvent souhaiter des réglages de contraste, luminosité, netteté, définition ou de colorimétrie différents selon le type de programme. Or, les réglages du rendu final d'une image dans les terminaux de l'art antérieur sont généralement effectués à partir des menus de configuration de ces terminaux. Il est souvent possible de définir un réglage de l'ensemble des paramètres en fonction de la source utilisée (tuner TNT interne, prise HDMI, entrées analogique). Cependant, généralement, seuls le contraste, la luminosité et la saturation des couleurs peuvent être directement modifiés au moyen d'une télécommande par des touches « + » et « - ».

Ces réglages concernent typiquement la luminosité, le contraste, le contraste dynamique, la température des couleurs, les nuances des couleurs (intensité R/V/B), la balance des blancs, la réduction de bruit (réduction des artefacts liés au décodage MPEG), la netteté (renforcement des contours par ajout d'un fin trait blanc), ou encore la correction du Gamma des images.

Le but de l'invention est de fournir une solution pour adapter automatiquement le rendu final de l'image d'un programme multimédia affiché sur un écran à des caractéristiques du programme multimédia ou d'au moins une image dudit programme multimédia.

### EXPOSÉ DE L'INVENTION

La présente invention est définie dans l'objet des revendications annexées.

### BRÈVE DESCRIPTION DES DESSINS

D'autres caractéristiques et avantages de l'invention ressortiront de la description qui va suivre, en référence aux figures annexées dans lesquelles:
- La figure 1 représente un exemple de liste de réglages prédéfinis du rendu final d'une image selon l'invention,
- la figure 2 représente une architecture générale illustrant les étapes et les moyens pour mettre en oeuvre le procédé selon l'invention,
- la figure 3 représente un tableau contenant une liste de champs utilisés pour élaborer des règles de sélection d'un réglage du rendu final d'une image.
- La figure 4 illustre les étapes essentielles du procédé selon l'invention.

### EXPOSÉ DÉTAILLÉ DE MODES DE RÉALISATION PARTICULIERS

L'invention sera décrite dans le cas de la visualisation sur un écran 2 d'un téléviseur 4 d'un programme audiovisuel 6 diffusé ou lu à partir d'un support d'enregistrement (disque dur, DVD, clé USB...).

Dans une première étape, l'utilisateur définit des réglages d'images qui seront ensuite utilisés automatiquement ou en sélection directe.

Notons que le mode automatique peut être activé par une touche dédiée sur le terminal ou sur une télécommande, ou dans la liste des réglages prédéfinis que l'on peut faire défiler par la touche « SCREEN PRESET » (AUTO-PRESET1->PRESET2->..->PRESETN->AUTO).

A titre d'exemple non limitatif, la définition d'un préréglage (PRESET) est faite par le choix des valeurs des paramètres suivants:
- Luminosité (0-100)
- Niveau Contraste (0-100)
- Contraste dynamique (O/N)
- Température des couleurs (Normal, Froid, Chaud)
- Nuances des couleurs (3 intensités R/V/B sur des valeurs 0-100)
- Réduction de bruit (réduction des artefacts liés au décodage MPEG) 0-100
- Facteurs de réduction de la définition source (100% à 10%) pour « adoucir » l'image en fonction de la définition source (SD, HD720 HD1080, UHD) à 100% la résolution n'est pas réduite
- Netteté des contours (renforcement des contours par ajout d'un léger trait blanc)
- Gamma (-100/+100).

Dans un premier temps, l'utilisateur définit une liste de réglages prédéfinis d'images.

La saisie de ces réglages est typiquement réalisée par l'ajustement effectif des réglages sur une image « test » d'un programme du type donné.

Alternativement, il est possible d'effectuer ou modifier un réglage prédéfini « in situ », le fond de l'image laissant apparaître le programme en cours.

Afin de faciliter les opérations, des réglages prédéfinis par défaut types peuvent être mémorisé dans les données de configurations.

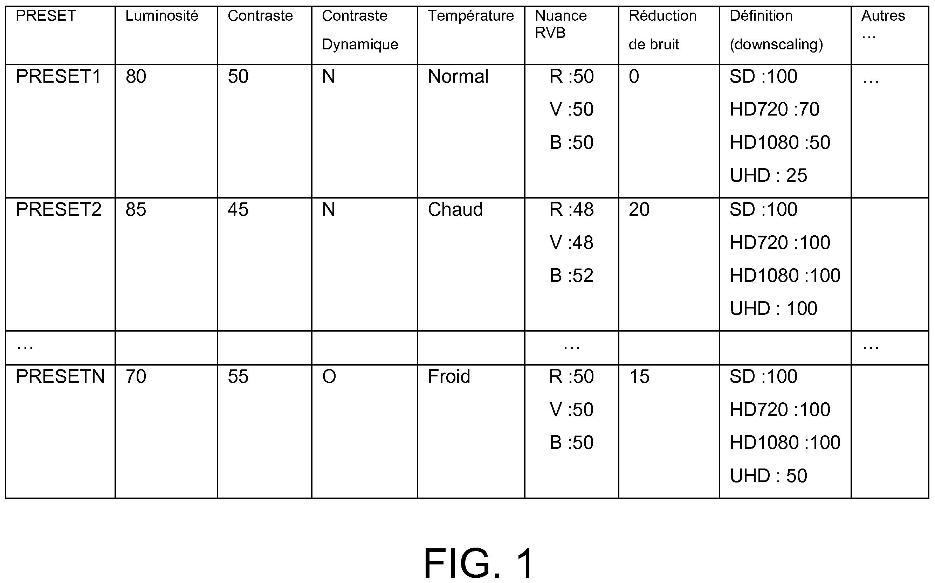

Le tableau de la figure 1 représente un exemple de liste de ces réglages prédéfinis.

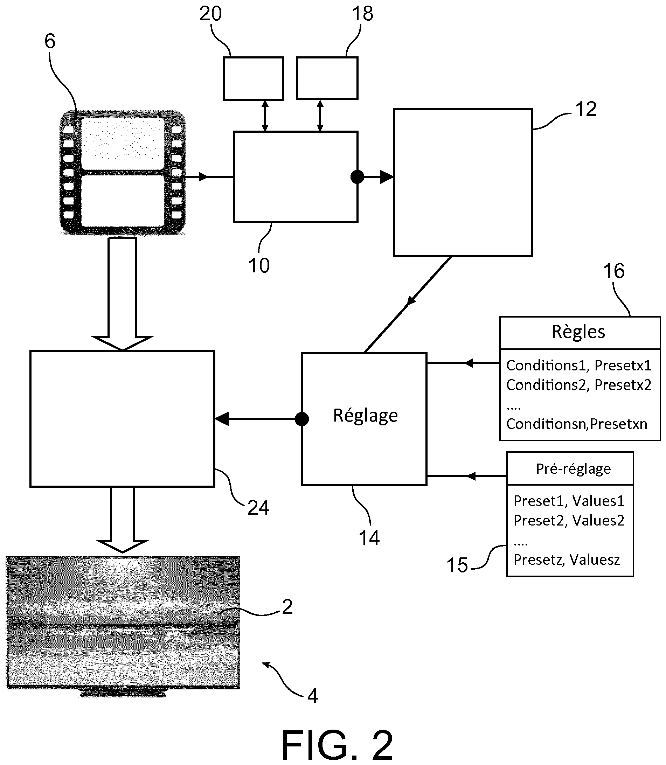

En référence à la figure 2, une unité de caractérisation de programme 10 acquiert des métadonnées 12 qui seront utilisées par une unité de sélection de réglages prédéfinis 14 pour appliquer des règles 16 destinées à définir le réglage souhaité du rendu final de l'image. Les métadonnées 12 sont typiquement acquises par lecture, ou extraction, à partir des données EPG (Electronic Program Guide) 18 diffusées avec le programme, dans les EIT (Event Information Table en anglais) permettant d'obtenir des informations telles que le type de programme (Film, Sport, Infos..), le résumé/synopsis, le (s) genre (s) (Action, Drame) ainsi que des informations complémentaires (acteurs, réalisateurs). Le numéro de chaine et l'heure courante peuvent être utilisés pour obtenir ces informations sur le programme courant.

Dans une autre variante, les métadonnées sont obtenues sur requête à un service distant, typiquement en ligne par Internet, si le terminal dispose d'une connexion, via un service web SOA (pour Service Oriented Architecture) 20. A cet effet, on utilise les paramètres de chaîne, date et heure, ou un identifiant de programme multimédia « content id » extrait des EIT, ou, alternativement, un mécanisme de reconnaissance automatique de programme multimédia ACR (pour Automatic Content Recognizer). A titre d'exemple, lorsque le programme est un film, des données complémentaires sur le film peuvent être obtenues sur des sites tels que « lmdb.com ».

Après l'acquisition des métadonnées 12, l'unité de sélection de réglages prédéfinis 14 exploite, sur la base de ces métadonnées, au moins une règle parmi la liste de règles 16. Cette exploitation est réalisée selon un ordre donné. Chaque règle associe une expression booléenne sur chaque métadonnée 12 à un des réglages prédéfinis d'image pour définir le réglage souhaité. L'unité de sélection de réglages prédéfinis 14 fournit ensuite les paramètres du réglage prédéfini sélectionné.

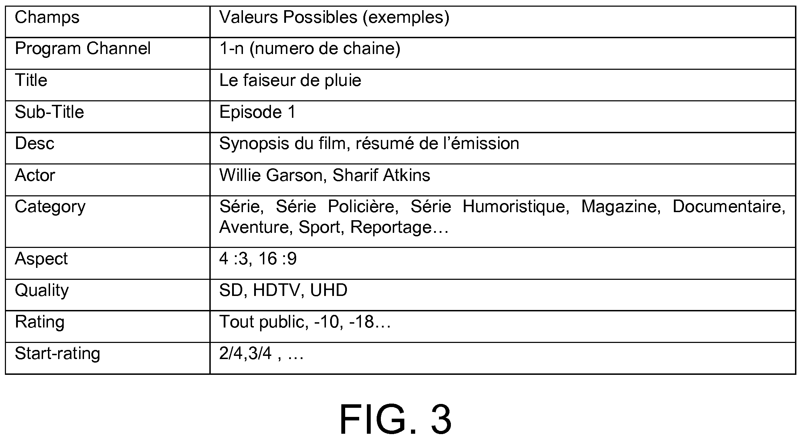

Le tableau de la figure 3 illustre un exemple de liste de champs utilisés pour élaborer les règles de sélection d'un réglage prédéfini du rendu final d'une image.

Certains champs peuvent contenir une liste de valeurs et sont répétés.

Ci-après un exemple de métadonnées comportant les champs définis dans le tableau de la figure 3.

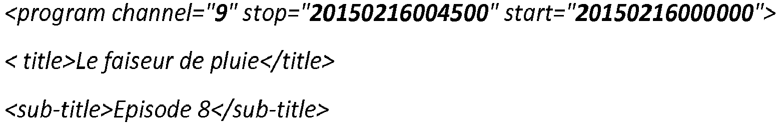

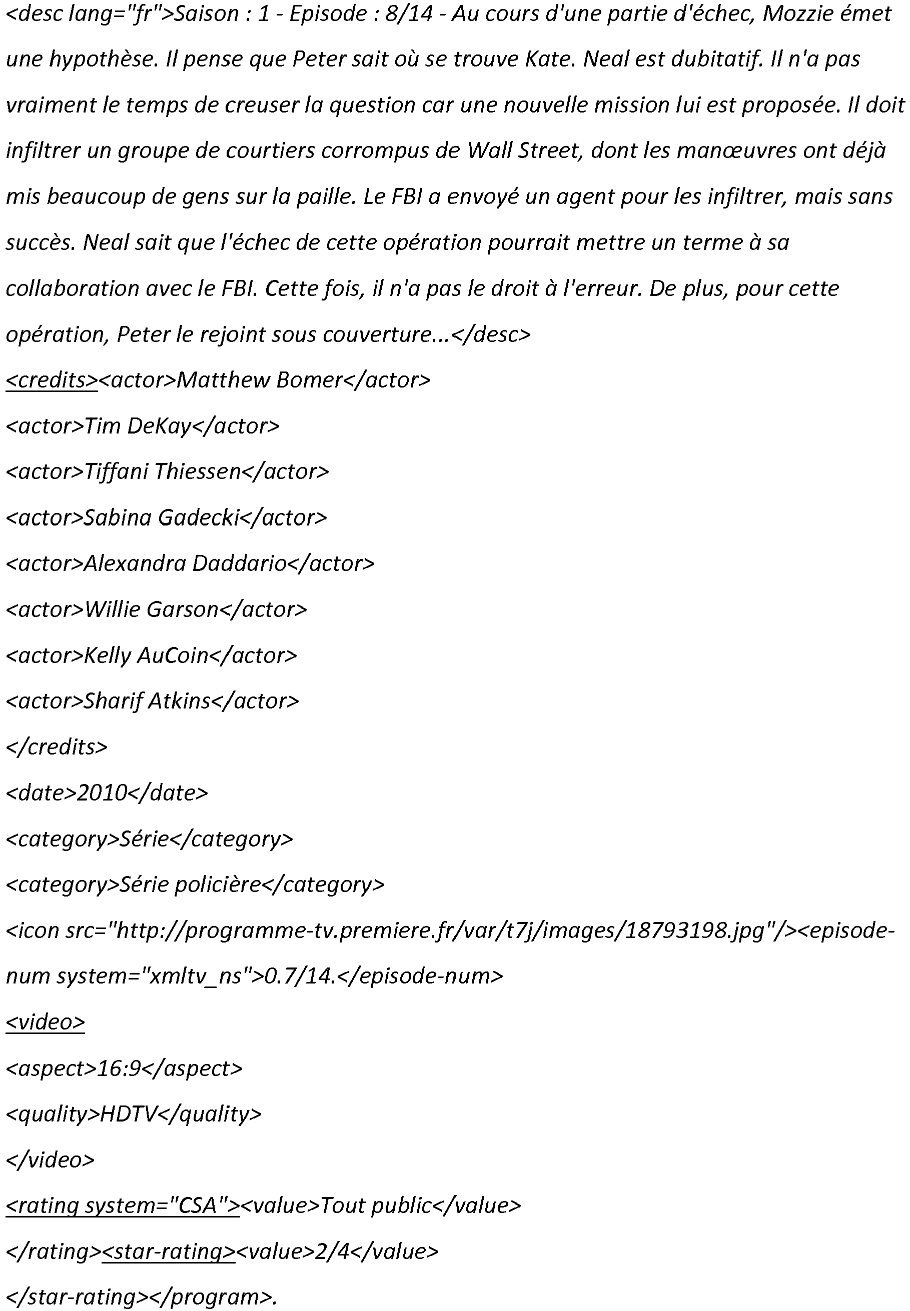

Une description des règles possibles est donnée ci-dessous sur la base du format de métadonnées défini par le tableau de la figure 3.

Notons qu'une règle est composée d'une expression booléenne comportant une liste de champs, chacun des champs étant associé à un opérateur et à une valeur, et d'un identifiant de réglage prédéfini dit sélectionné par la règle. Le résultat de l'évaluation de l'expression booléenne d'une règle, lorsqu'il est « VRAI » provoque la sélection par la règle du réglage prédéfini sélectionné (PRESET) associé à son expression booléenne. Si le résultat est FAUX, le réglage prédéfini n'est pas sélectionné et on exploite de façon analogue la règle suivante.

Lorsqu'un champ de même type est répété dans l'expression booléenne d'une règle, il faut en évaluer la disjonction (un OU) des évaluations ; on évalue par contre la conjonction (un ET) des évaluations de champs différents.

Les opérateurs classiques de comparaison (= ;> ;< ;<= ;>= ;<> ; Contient) sont utilisés.

L'opération « Contient » permet de détecter la présence de mot clés dans le titre ou dans la description. Ainsi par exemple l'expression (« Le Football, un sport ou un spectacle ? », Contient, « Football Sport ») est vrai, et l'expression (« Le Football, un sport ou un spectacle ? », Contient, « Football Championnat ») est faux.

Dans une autre variante de mise en oeuvre du procédé selon l'invention, une règle peut être définie sous la forme BNF (Backus Naur Form) ((Champ, Opérateur, Valeur)*, Preset).

### Exemples:

```
         ((<ProgramChannel>,=, « 1 »),
         (<Category>,=, « Série »),
         (<Category>, Contient, « Magazine »), PRESET2)
```

Dans ce cas, « PRESET2 » est sélectionné sur la chaîne 1, si un des champs Category est égal à « Série » ou si l'un d'entre eux contient « Magazine».

```
         ((<Category>,=, « Film »),
         (<Category>, Contient, « Film »),
         (<Rating>,=,-10), PRESET3))
```

Dans ce cas, « PRESET3 » est sélectionné si un des champs « Category » contient « Film » et si le champ Rating est égal à « -10 ».

Il est également possible d'utiliser des expressions booléennes plus complexes avec des opérateurs et des fonctions supplémentaires (NOT, XOR, AND, Length()...).

Enfin, pour réaliser l'évaluation des règles dans un mode déterministe dans lequel plusieurs règles peuvent être vraies, celles-ci sont triées par cardinalité décroissante de champs évalués. Ainsi les règles comportant le plus de conditions sont évaluées avant les règles comportant moins de conditions. Ceci permet de donner priorité aux cas particuliers, et de leur permettre ainsi d'être pris en compte.

Notons que, l'ordre d'évaluation des règles peut être modifié par l'utilisateur.

Si, à la fin de l'exploitation de la liste des règles, aucun réglage prédéfini n'a été sélectionné, deux comportements sont alors envisageables:
- Ne pas modifier le réglage,
- Appliquer une valeur « PRESET-D » par défaut (ce qui correspond à une règle ne comportant pas de conditions).

Il est à noter que l'utilisateur peut établir la liste des règles 16 dans le menu de configuration du terminal 4 en sélectionnant les champs prédéfinis (<Title>,<Category>,<Actor>). Ceci est effectué soit en saisissant les valeurs attendues, soit en sélectionnant une valeur dans une liste lorsque le domaine de valeur est borné (par exemple pour les champs <Category> ou <Rating>).

Dans un autre mode de réalisation de l'invention, les règles sont créées, en direct, à la volée en fonction des métadonnées du programme courant.

A cet effet, le terminal et/ou la télécommande comporte une touche « règles » qui permet d'afficher les métadonnées du programme en cours. L'utilisateur sélectionne les critères à évaluer (champs et valeurs) à partir des métadonnées affichées (mots dans le titre, le sous-titre, valeur dans la catégorie, etc...).

Par exemple :
- L'appui sur la touche « » fait apparaitre les métadonnées du programme en cours ;
- Les flèches permettent de naviguer sur les mots compris dans les valeurs de champs, chaque mot couramment sélectionné apparaissant surligné ;
- L'appui sur la touche « select » sélectionne le champ et le mot clé surligné, champ et valeur mot clé sont ajoutés comme condition dans la règle en construction
- La touche « + » permet de sélectionner l'opérateur utilisé dans la dernière condition créée parmi [=,>,<,<=,>= ;<> ;Contient]
- L'appui sur la touche « delete » supprime dans la règle la dernière condition ajoutée
- La touche « record » permet l'enregistrement de la règle composée de la liste des conditions créées et propose de sélectionner la valeur de réglage prédéfini « PRESETx » en utilisant les flèches (l'effet est alors immédiatement visible sur le programme en fond d'écran).

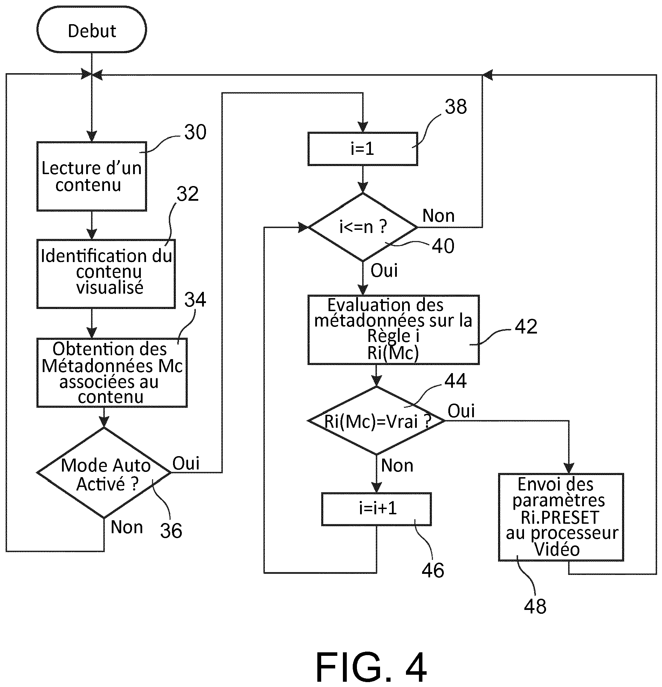

La figure 4 illustre les étapes essentielles du procédé selon l'invention.

A l'étape 30, le terminal déclenche la lecture d'un programme multimédia.

L'unité de caractérisation de programme 10 intégrée au terminal de réception ou à un décodeur identifie le programme multimédia à l'étape 32.

A l'étape 34, l'unité de caractérisation de programme 10 acquiert les métadonnées associées au programme multimédia, puis les transmet à l'unité de sélection de réglages prédéfinis 14.

Celle-ci teste, à l'étape 36, si le mode automatique est activé ou non.

Si le mode automatique n'est pas activé, l'utilisateur effectue manuellement à la volée les réglages de l'image en appuyant successivement sur une touche dédiée à cet effet sur la télécommande comme décrit ci-dessous :
- les appuis rapides (premier délai inférieur à 0,5 seconde) sur la touche « SCREEN PRESET » font basculer les réglages prédéfinis de PRESET1->PRESET2->..->PRESETN->PRESET1
- un identifiant du réglage prédéfini actif apparait en surimpression sur l'écran (overlay),
- après un deuxième délai supérieur à 0,5 seconde, le dernier réglage prédéfini actif est sélectionné et appliqué au signal vidéo (sur le processeur graphique du téléviseur ou la Set Top Box),
- l'identifiant du réglage prédéfini ainsi sélectionné disparait ensuite de l'écran. Notons que les durées du premier et du deuxième délai peuvent être modifiées.

Cette première approche permet de basculer rapidement d'un réglage prédéfini à un autre sans entrer dans la complexité des menus systèmes.

Dans un mode préféré de réalisation de l'invention, le mode automatique est activé par défaut de manière à appliquer automatiquement un réglage prédéfini en fonction d'une caractérisation du programme en cours de visualisation. Dans ce cas, après l'étape 36, si la liste des règles comporte un nombre n de règles, celles-ci sont successivement exploitées par ordre de rang i croissant à partir de 1.

On fixe donc i à 1 à l'étape 38.

A l'étape 40, on teste si toutes les règles ont été examinées.

Si ce test est négatif, à l'étape 42, on évalue l'expression booléenne de la règle couramment exploitée de rang i de la liste des règles, sur les métadonnées Mc.

A l'étape 44, on teste le résultat de l'étape 42.

Si ce résultat indique une valeur « FAUX », c'est-à-dire, si l'expression booléenne de la règle Ri appliquée à la métadonnée Mc n'est pas vérifiée, alors on exploite de façon analogue, après l'incrémentation de i à l'étape 46 et une nouvelle mise en oeuvre de l'étape 40, lors d'une nouvelle mise en oeuvre de l'étape 42, la règle suivante de la liste à la métadonnée Mc.

Si l'expression booléenne de la règle Ri appliquée à la métadonnée Mc est vérifiée, alors les paramètres du réglage prédéfini sélectionné de la règle Ri sont envoyés au microprocesseur 24.

Dans une autre variante de réalisation, le réglage du rendu final de l'image peut être complété par un réglage sonore selon un principe tout à fait similaire. Selon le programme (Musical, Journal d' Informations, Film) un profil sonore est automatiquement sélectionné favorisant par exemple la voix, le son Dolby Digital, la stéréo....

Une autre variante possible est la génération de métadonnées supplémentaires en analysant l'image (reconnaissance d'objet, de type de scène, tel que l'action etc...).

Afin que le procédé puisse être appliqué sur des programmes multimédias enregistrés, les métadonnées doivent, le cas échéant, être enregistrées avec le programme multimédia.

Enfin si un programme multimédia fourni sans métadonnées est lu, il est possible en utilisant du fingerprinting ou du watermarking de l'identifier et d'acquérir ensuite, le cas échéant, auprès d'un serveur les métadonnées correspondantes (Base ImdB, ou système Gracenote) sans sortir du cadre de l'invention.

## Revendications

1. Procédé de réglage du niveau de définition d'au moins une image d'un programme multimédia affiché sur un écran (2) d'un terminal (4) muni d'au moins une unité de caractérisation du programme multimédia (10) et d'au moins une unité de sélection de réglages prédéfinis (14), procédé dans lequel,- l'unité de caractérisation (10) acquiert automatiquement des métadonnées attachées audit programme multimédia et soumet lesdites métadonnée à l'unité de sélection de réglages prédéfinis (14),
- l'unité de caractérisation (10) génère au moins une métadonnée supplémentaire à partir d'une analyse d'une image affichée du programme courant, crée, en direct et à la volée au moins une règle destinée à définir le réglage souhaité du rendu final de l'image en fonction des métadonnées du programme courant, l'une au moins des règles ainsi crées étant destinée à définir le réglage souhaité du rendu final de l'image en fonction de la métadonnée supplémentaire, et soumet lesdites métadonnées à l'unité de sélection de réglages prédéfinis,
- l'unité de sélection de réglages prédéfinis (14) sélectionne automatiquement les réglages selon des règles préenregistrées et/ou la règle définie en direct à la volée **caractérisée en ce que** ladite métadonnée supplémentaire est générée à partir d'une reconnaissance d'objet et/ou de type de scène.

2. Procédé selon la revendication 1 dans lequel les métadonnées attachées audit programme multimédia sont représentatives de l'un au moins dés paramètres suivants:
- un titre de programme multimédia,
- un type de programme multimédia,
- un genre de programme multimédia,
- un niveau moral de programme multimédia, et,
- un résumé de programme multimédia.

3. Procédé selon la revendication 2 dans lequel les métadonnées attachées audit programme multimédia sont extraites d'un Guide de programme multimédia diffusé (EIT).

4. Procédé selon la revendication 2 dans lequel les métadonnées concernant ledit programme multimédia sont obtenues en ligne à partir d'un serveur distant.

5. Procédé selon l'une des revendications 1 à 4 comportant en outre une étape de pré enregistrement des règles définies en fonction valeurs desdites métadonnées.

6. Procédé selon la revendication 5 comportant en outre une étape de sélection manuelle du réglage du niveau de définition parmi une pluralité de réglage prédéfinis.

7. Procédé selon la revendication 5, comportant en outre une étape de réglage du niveau de définition d'au moins une composante audio du programme multimédia.

8. Terminal de visualisation d'au moins une image d'un programme multimédia comportant, un écran (2), au moins une unité de caractérisation du programme multimédia (10), et au moins une unité de sélection de réglages prédéfinis (14) de ladite image, dans lequel
- l'unité de caractérisation de programme multimédia (10) est adaptée pour acquérir automatiquement des métadonnées attachées audit programme multimédia et pour générer au moins une métadonnée supplémentaire à partir d'une analyse d'une image affichée du programme courant, pour créer en direct et à la volée, au moins une règle destinée à définir le réglage souhaité du rendu final de l'image en fonction des métadonnées du programme courant, l'une au moins des règles ainsi crées étant destinée à définir le réglage souhaité du rendu final de l'image en fonction de la métadonnée supplémentaire, et pour soumettre lesdites métadonnées à l'unité de sélection de réglages prédéfinis (11), et,
- l'unité de sélection de réglages prédéfinis (14) est adaptée pour sélectionner automatiquement les réglages selon des règles préenregistrées et/ou la règle définie en direct à la volée, terminal de visualisation **caractérisé en ce qu'**il comporte :en outre des moyens pour générer au moins une métadonnée supplémentaire à partir d'une analyse de l'image.

9. Terminal de visualisation selon la revendication 8 comportant en outre des moyens pour effectuer une sélection manuelle du réglage du niveau de définition parmi une pluralité de réglage prédéfinis.

10. Terminal de visualisation selon la revendication 9 comportant en outre des moyens pour acquérir, en ligne, les métadonnées concernant ledit programme multimédia à partir d'un serveur distant.

11. Programme d'ordinateur mémorisé sur un support d'enregistrement comportant des instructions pour mettre en oeuvre les étapes du procédé selon la revendication 1 lorsqu'il est exécuté sur un ordinateur.

## Patentansprüche

1. Verfahren zum Einstellen der Auflösung von zumindest einem Bild eines Multimedia-Programms, das auf einem Bildschirm (2) eines Endgeräts (4) angezeigt wird, das mit zumindest einer Charakterisierungseinheit für das Multimedia-Programm (10) und zumindest einer Auswahleinheit (14) zum Auswählen von vordefinierten Einstellungen versehen ist, wobei bei dem Verfahren die Charakterisierungseinheit (10) automatisch Metadaten erfasst, die an das Multimedia-Programm angehängt sind, und die Metadaten an die Auswahleinheit (14) zum Auswählen der vordefinierten Einstellungen übermittelt, wobei
- die Charakterisierungseinheit (10) zumindest eine zusätzliche Metadateninformation ausgehend von einer Analyse eines angezeigten Bildes des laufenden Programms erzeugt, live und spontan zumindest eine Regel erstellt, um die gewünschte Einstellung der endgültigen Wiedergabe des Bildes gemäß den Metadaten des laufenden Programms zu definieren, wobei zumindest eine der so erstellten Regeln dazu bestimmt ist, die gewünschte Einstellung der endgültigen Wiedergabe des Bildes gemäß der zusätzlichen Metadateninformation zu definieren, und diese Metadaten an die Auswahleinheit zum Auswählen der vordefinierten Einstellungen übermittelt,
- die Auswahleinheit (14) zum Auswählen der vordefinierten Einstellungen die Einstellungen automatisch gemäß vorab aufgezeichneten Regeln und/oder gemäß der live und spontan definierten Regel auswählt,
**dadurch gekennzeichnet, dass** die zusätzliche Metadateninformation ausgehend von einer Objekt- und/oder Szenentyperkennung erzeugt wird.

2. Verfahren nach Anspruch 1, wobei die dem Multimedia-Programm angehängten Metadaten repräsentativ sind für zumindest einen der nachstehenden Parameter:
- einen Multimedia-Programmtitel,
- eine Art von Multimedia-Programm,
- ein Genre von Multimedia-Programm,
- ein sittliches Niveau des Multimedia-Programms, und
- eine Multimedia-Programmübersicht.

3. Verfahren nach Anspruch 2, wobei die dem Multimedia-Programm angehängten Metadaten aus einem Broadcast-Multimedia-Programmführer (EIT) extrahiert werden.

4. Verfahren nach Anspruch 2, wobei die das Multimedia-Programm betreffenden Metadaten online von einem Remote-Server abgerufen werden.

5. Verfahren nach einem der Ansprüche 1 bis 4, ferner umfassend einen Schritt des Vorabaufzeichnens von Regeln, die gemäß Werten der Metadaten definiert sind.

6. Verfahren nach Anspruch 5, ferner umfassend einen Schritt des manuellen Auswählens der Einstellung der Auflösung aus mehreren vordefinierten Einstellungen.

7. Verfahren nach Anspruch 5, ferner umfassend einen Schritt des Einstellens der Auflösung von zumindest einer Audiokomponente des Multimediaprogramms.

8. Endgerät zum Visualisieren von zumindest einem Bild eines Multimedia-Programms, enthaltend einen Bildschirm (2), zumindest eine Charakterisierungseinheit (10) für das Multimedia-Programm und zumindest eine Auswahleinheit (14) zum Auswählen von vordefinierten Einstellungen, wobei
- die Charakterisierungseinheit (10) für das Multimedia-Programm dazu geeignet ist, automatisch Metadaten zu erfassen, die an das Multimedia-Programm angehängt sind, und zumindest eine zusätzliche Metadateninformation ausgehend von einer Analyse eines angezeigten Bildes des laufenden Programms zu erzeugen, live und spontan zumindest eine Regel zu erstellen, um die gewünschte Einstellung der endgültigen Wiedergabe des Bildes gemäß den Metadaten des laufenden Programms zu definieren, wobei zumindest eine der so erstellten Regeln dazu bestimmt ist, die gewünschte Einstellung der endgültigen Wiedergabe des Bildes gemäß der zusätzlichen Metadateninformation zu definieren, und diese Metadaten an die Auswahleinheit (11) zum Auswählen der vordefinierten Einstellungen zu übermitteln,
- die Auswahleinheit (14) zum Auswählen der vordefinierten Einstellungen dazu geeignet ist, die Einstellungen automatisch gemäß vorab aufgezeichneten Regeln und/oder gemäß der live und spontan definierten Regel auszuwählen, wobei das Visualisierungsendgerät **dadurch gekennzeichnet ist, dass** es ferner Einrichtungen enthält, um zumindest eine zusätzliche Metadateninformation ausgehend von einer Analyse des Bildes zu erzeugen.

9. Visualisierungsendgerät nach Anspruch 8, ferner enthaltend Einrichtungen zum Durchführen einer manuellen Auswahl der Einstellung der Auflösung aus mehreren vordefinierten Einstellungen.

10. Visualisierungsendgerät nach Anspruch 9, ferner enthaltend Einrichtungen, um die das Multimedia-Programm betreffenden Metadaten online von einem Remote-Server abzurufen.

11. Computerprogramm, das auf einem Aufzeichnungsträger abgespeichert ist und Anweisungen enthält, um die Schritte des Verfahrens nach Anspruch 1 bei Auszuführen auf einem Computer auszuführen.

## Claims

1. A method for setting the level of definition of at least one image of a multimedia program displayed on a screen (2) of a terminal (4) provided with at least one unit (10) for characterizing the multimedia program and at least one unit (14) for selecting predefined settings, in which method,
- the characterizing unit (10) automatically acquires metadata attached to said multimedia program and submits said metadata to the unit (14) for selecting predefined settings,
- the characterizing unit (10) generates at least one further metadata from an analysis of a displayed image of the current program, creates, live and on the fly, at least one rule for defining the desired setting of the final rendering of the image as a function of the metadata of the current program, at least one of the rules thus created being intended to define the desired setting of the final rendering of the image as a function of the further metadata, and submits said metadata to the unit for selecting predefined settings,
- the unit (14) for selecting predefined settings automatically selects the settings according to pre-recorded rules and/or the live on-the-fly defined rule, in that said further metadata is generated from an object and/or scene type recognition.

2. The method according to claim 1, wherein the metadata attached to said multimedia program are representative of at least one of the following parameters:
- a title of multimedia program,
- a type of multimedia program,
- a genre of multimedia program,
- a moral level of multimedia program, and
- a summary of multimedia program.

3. The method according to claim 2, wherein the metadata attached to said multimedia program are extracted from a broadcast multimedia program guide (EIT).

4. The method according to claim 2, wherein the metadata relating to said multimedia program are obtained online from a remote server.

5. The method according to one of the claims 1 to 4, further including a step of prerecording defined rules as a function of values of said metadata.

6. The method according to claim 5, further including a step of manually selecting the setting of the level of definition from a plurality of predefined settings.

7. The method according to claim 5, further including a step of setting the level of definition of at least one audio component of the multimedia program.

8. A viewing terminal for viewing at least one image of a multimedia program including a screen (2), at least one unit (10) for characterizing the multimedia program, and at least one unit (14) for selecting predefined settings for said image, wherein
- the unit (10) for characterizing the multimedia program is adapted to automatically acquire metadata attached to said multimedia program and to generate at least one further metadata from an analysis of an image displayed of the current program, to create live and on the fly, at least one rule for defining the desired setting of the final rendering of the image as a function of the metadata of the current program, at least one of the rules thus created being intended to define the desired setting of the final rendering of the image as a function of the further metadata, and to submit said metadata to the unit (11) for selecting predefined settings, and,
- the unit (14) for selecting predefined settings is adapted to automatically select the settings according to pre-recorded rules and/or the live on-the-fly defined rule, viewing terminal **characterized in that** it further includes means for generating at least one further metadata from an analysis of the image.

9. The viewing terminal according to claim 8, further including means for performing manual selection of the setting of the level of definition from a plurality of predefined settings.

10. The viewing terminal according to claim 9, further including means for acquiring, online, the metadata relating to said multimedia program from a remote server.

11. A computer program stored on a recording medium including instructions for implementing the steps of the method according to claim 14 when run on a computer.
